# EUROPÄISCHE PATENTSCHRIFT

(11) **EP 0 624 291 B1**
(45) Veröffentlichungstag und Bekanntmachung des Hinweises auf die Patenterteilung: **02.04.1997**
(21) Anmeldenummer: 93902221.6
(22) Anmeldetag: 18.01.1993
(51) Int. Cl.: H04B 1/66

(54) **FEHLERSCHUTZ IN EINEM SUBBANDKODIERER**
ERROR PROTECTION IN A SUBBAND CODER
PROTECTION CONTRE LES ERREURS DANS UN CODEUR EN SOUS-BANDES

(30) Priorität: 27.01.1992 DE 4202140; 31.01.1992 DE 4202654
(43) Veröffentlichungstag der Anmeldung: 17.11.1994
(73) Patentinhaber: DEUTSCHE THOMSON-BRANDT GMBH, 78048 Villingen-Schwenningen (DE); Philips Electronics N.V., 5621 BA Eindhoven (NL); Institut für Rundfunktechnik GmbH, D-80939 München (DE)
(72) Erfinder: SCHRÖDER, Ernst, F., D-30655 Hannover (DE); PLENGE, Georg, D-82544 Egling (DE); VAN DE KERKHOF, Leon, Maria, NL-5625 WT Eindhoven (NL)
(74) Vertreter: Einsel, Robert, Dipl.-Ing.
(86) Internationale Anmeldenummer: EP9300097
(87) Internationale Veröffentlichungsnummer: WO9315562

(56) Entgegenhaltungen:
- SPEECH COMMUNICATION Bd. 7, Nr. 2, Juli 1988, AMSTERDAM NL Seiten 193 - 207;LAZZARI ET AL:'Comparison of two Speech Codecs for DMR Systems'
- ICC'86, TORONTO Bd. 1(3), Juni 1986, IEEE, NY USA Seiten 23 - 27;AOYAMA ET AL:'Applications of 7 kHz-band Digital Speech Signal at 64 kbps to ISDN and NON- ISDN'
- PATENT ABSTRACTS OF JAPAN vol. 13, no. 16 (E-703)(3364) 13. Januar 1989 & JP-A-63 221 728

## Beschreibung

Die Erfindung betrifft ein Verfahren zum Übertragen, Speichern und/oder Empfangen digitaler, subband-codierter Tonsignale mit Skalenfaktoren und ein Empfangsgerät und ein Speichermedium für diese Signale.

T.Aoyama et al. "Applications of 7kHz-band Digital Speech Signal at 64kbps to ISDN and Non-ISDN", ICC'86, Toronto, Bd.1(3), Juni 1986, IEEE, Seiten 23-27, beschreibt die Übertragung von digitalen subbandcodierten Tonsignalen unter Verwendung von Datenrahmen.
Aus DE-OS-3506912, DE-OS-3621513 und DE-3639753 ist es bekannt, abgetastete, digitalisierte Audiosignale einer Teilbandcodierung - nachfolgend Subbandcodierung genannt - zu unterziehen. Dabei werden beispielsweise die Audiosignale in 1152 Abtastwerten entsprechende Zeitabschnitte - sogenannte Fenster - (24ms bei einer Abtastfrequenz von 48kHz) unterteilt. Nach der Aufspaltung in z.B. 27 Subbänder werden in jedem Subband bis zu drei Skalenfaktoren bestimmt. Diese Skalenfaktoren werden z.B. mit 6 bit quantisiert und an bestimmter Stelle in einem bekannten Datenrahmen übertragen. Ihre Anzahl und Bedeutung wird als Skalenfaktor-Auswahlinformation (Scalefactor Select Information) ebenfalls an bestimmter Stelle im Datenrahmen übertragen.
Jeder einzelne Datenrahmen als Teil eines in sequentielle Datenrahmen aufgeteilten Bitstroms weist regelmäßig ein Kopfteil - einen sogenannten Header -, optional ein Fehlerprüfteil - einen sogenannnten "Error Check" -, einen Audio-Datenteil und ein Zusatzdatenteil - sogenannte "Ancillary Data"- auf.
Nach der Skalierung mit Hilfe der Skalenfaktoren werden die Abtastwerte in jedem Subband mit einer vorbestimmten Anzahl bits quantisiert und an bestimmter Stelle, vorzugsweise im Audiodatenteil des Datenrahmen übertragen.
Die Anzahl der verwendeten Bits wird in codierter Form als Bitzuordnungstabelle (Bit allocation) ebenfalls an bestimmter Stelle im Audiodatenteil des Datenrahmen übertragen.
Den Anfang des Datenrahmens bildet ein Header, der neben einem Synchronwort grundlegende Informationen über das Tonsignal und die Codierung enthält (z.B. Stereo/Mono, Abtastfrequenz, Preemphase, Datenrate).

Weiterhin ist darüber hinaus vorgesehen, daß am Ende des Datenrahmens im Zusatzdatenteil optional einige Bits für musikstückbezogene Zusatzinformationen (z.B. Quellenkennzeichnung, Musiktitel, Text) bereitgehalten werden.

Die Anzahl der pro Subband für die Codierung der Abtastwerte zu verwendenden Bits wird in einer parallellen Operation anhand psychoakustischer Gegebenheiten ermittelt. Dabei hat die Gesamtzahl der Bits aus allen Subbändern eine Obergrenze darin, daß entsprechend der gewünschten Übertragungsdatenrate jeder Datenrahmen nur eine bestimmte Anzahl von Bits enthalten kann (z.B. 6144 bits bei 256 kbit/s). Von dieser maximalen Zahl sind noch die für die anderen Datenfelder innerhalb des Rahmens verwendeten Bits abzuziehen. Dies führt dazu, daß so gut wie nie alle Bits des Datenrahmens sinnvolle Informationen enthalten. Stets verbleiben eine Reihe von bedeutungslosen Füllbits hinter den für die Abtastwerte verwendeten Bits. Durch entsprechende Vorgabe bei der Berechnung der Zahl der überhaupt verteilbaren Bits kann man die Anzahl der Füllbits steuern, insbesondere größer als unbedingt notwendig halten.

Im Falle von Übertragungsstörungen verhält sich solch ein, wie vorstehend beschrieben,codiertes Tonsignal stark unterschiedlich, je nachdem welche Teile des Datenrahmens gestört werden.

Insbesondere führt eine Störung von Header, Bitzuordungstabelle und Skalenfaktor-Auswahlinformation zu großen Störungen im decodierten Signal. Aus diesem Grund wird als Option häufig ein Fehlerschtzteil oder Fehlerschutzwort (16 bit cyclic redundancy check, CRC) vorgesehen, mittels dessen ein Fehler im genannten Bereich des Datenrahmens erkannt werden und eine entsprechende Schutzmaßnahme im Empfänger eingeleitet werden kann (Fehlerverschleierung, Error-Concealment).

Verblüffenderweise haben Übertragungsfehler innerhalb der codierten Audio-Abtastwerte im Audiodatenteil nur geringe Auswirkungen, sodaß sogar bis zu sehr hohen Fehlerraten ( ca.10⁻²) so gut wie kein gesonderter Fehlerschutz erforderlich ist.

Aufgabe der Erfindung ist es, die wie vorstehend beschriebenen teilbandcodierten Tonsignalen besser gegen Übertragungsfehler zu schützen.

Die Aufgabe wird erfindungsgemäß mit einem Übertragungsverfahren mit den Merkmalen nach Anspruch 1 gelöst. Vorteilhafte Weiterbildungen sind in den Unteransprüchen beschrieben.

Der Erfindung liegt die Erkenntnis zugrunde, daß Fehler innerhalb der Skalenfaktoren - nachfolgend als Skalenfaktor-Fehler bezeichnet- sich sehr störend bei der Wiedergabe auswirken. So können diese Skalenfaktor-Fehler zu teilweise sehr lauten 'Piep'-Signalen am Ausgang des Empfängers führen. Um Zerstörungen am Gehör eines Benutzers oder an Lautsprechermembranen zu verhindern ist hier also ein wirksamer zusätzlicher Fehlerschutz, mindestens jedoch eine Erkennung dieser Skalenfaktor-Fehler, notwendig, damit entsprechende Fehlerverschleierungsmaßnahmen eingeleitet werden können.

Als Schutzmaßnahme wird erfindungsgemäß eine zusätzliche Fehlerschutzinformation zum Schutz der Skalenfaktoren in den Datenrahmen eingefügt. Es wird dazu ein (oder mehrere) CRC-Wort verwendet. Dieses dient dazu, einen oder mehrere Übertragungsfehler innerhalb der Skalenfaktoren zu detektieren.

Da es sich gezeigt hat, daß eine Übertragungsstörung innerhalb der Skalenfaktoren lediglich dann zu einer deutlich hörbaren Störung führt, wenn eines oder mehrere der drei MSBs (Most Significant Bit) der mit 6 bit codierten Skalenfaktoren gestört sind, reicht es aus, die drei MSBs der Skalenfaktoren mit einem CRC zu überwachen.

Weitere Untersuchungen haben gezeigt, daß es zweckmäßig ist, nicht alle Skalenfaktoren aller Subbänder zusammen mit einem CRC zu schützen, sondern z.B. vier Gruppen zu bilden und damit die Skalenfaktoren nur einer bestimmten Anzahl von Subbändern mit Hilfe eines CRC zu überwachen. Beispielsweise kann man bei insgesamt 27 Subbändern die Staffelung: 2, 4, 8, 13 oder 4, 4, 8 11 oder 1, 1, 2, 4, 8, 11 oder eine andere Staffelung der Subbänder verwenden. Zusätzlich hat sich gezeigt, daß bei einem codierten Stereosignal die Skalenfaktoren für den linken und den rechten Kanal gemeinsam geschützt werden können.

Um die zusätzlichen CRC Worte in kompatibler Form in den bekannten Datenrahmen einfügen zu können, werden sie an das Ende des Datenrahmens in den Bereich der bedeutungslosen Füllbits gelegt. Mit Hilfe der Berechnungen zur Bitzuweisung wird dabei sichergestellt, daß ständig genügend Platz für z.B. vier CRC Worte mit z.B. je 8 bit übrigbleibt.

Wenn tonsignalbezogene Information nicht vorhanden ist, dann befinden sich die zusätzlichen CRC Worte also am Ende des Datenrahmens, ist sie jedoch vorhanden, so werden die zusätzlichen CRC Worte unmittelbar davor eingefügt.

Die Erkennung von Übertragungsstörungen innerhalb der Skalenfaktoren kann erst erfolgen, wenn sowohl die Skalenfaktoren selbst als auch die zusätzlichen CRC Worte im Empfänger verfügbar sind. Da die zusätzlichen CRC Worte sich praktisch am Ende des Datenrahmens befinden, müssen also sämtliche Daten des Datenrahmens zunächst zwischengespeichert werden, bevor mit der Decodierung begonnen werden kann. Dies kann vermieden werden, wenn im fortlaufenden Datenstrom die eingefügten CRC Worte sich auf die Skalenfaktoren des jeweils unmittelbar folgenden Datenrahmens beziehen. Dies führt zwar zu einer Aufwandserhöhung im Sender, was z.B. bei einem Rundfunksystem tolerierbar ist, aber zu einer deutlichen Einsparung von Speicherplatz im Empfänger.

Nachfolgend wird ein Ausführungsbeispiel der Erfindung an Hand einer Zeichnung näher erläutert. In der Zeichnung stellen dar:

Nachflolgend wird ein Ausführungsbeispiel der Erfindung anhand einer Zeichnung näher erläutert.in der Zeichnung stellen dar.
- Fig.1a: ein Rahmenformat für die Audio-Signalübertragung
- Fig. 1b: eine detaillierte Aufteilung des Rahmenformats nach Fig. 1a

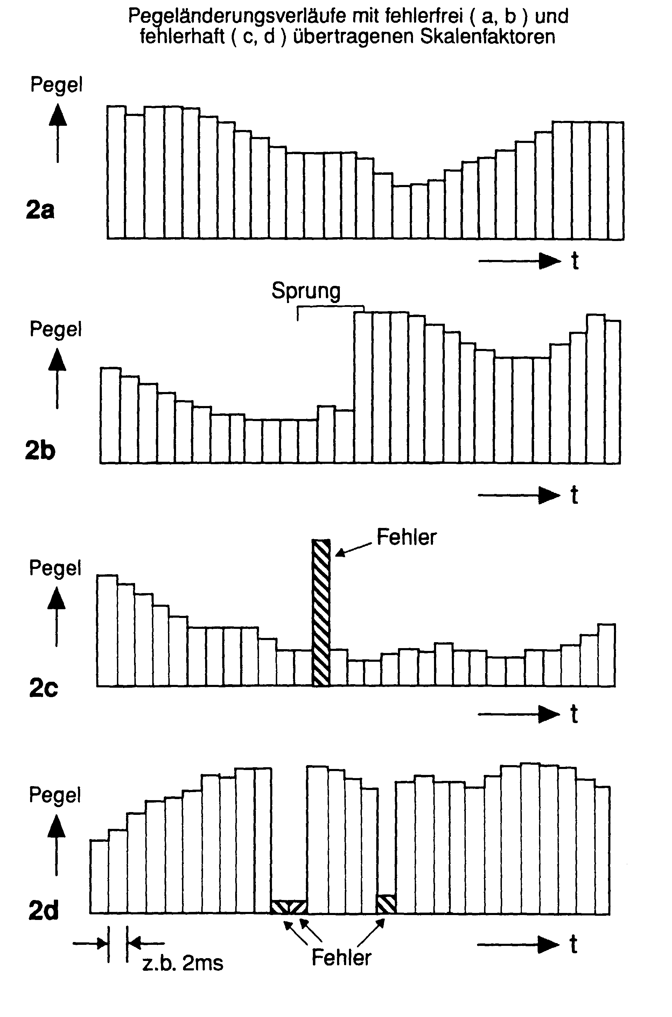

- Fig. 2a-d: zeigt zeitliche Verläufe von fehlerfrei (Fig. 2a und 2b) sowie fehlerhaft (Fig. 2c und 2d) zu übertragenen Skalenfaktoren eines digitalkodiernten Tonsignals.

Fig. la zeigt einen Überblick über das Rahmenformat eines Hauptrahmens, der als Teil eines derart rahmenmäßig aufgeteilten Bitstroms von digitalisierten Audiosignalen übertragen wird. Der Rahmen weist ein Kopfteil - einen sogenannten Header -, ein Fehlerprüfteil - ein sogenannten Error Check - ein Audiodatenteil und ein tonsignalbezogenes Zusatzdatenteil - sogenannte Ancillary Daten - auf. Bei der Übertragung werden einzelne Bits innerhalb eines Rahmens oder mit Bits anderer Rahmen verschachtelt (Interleaving) und optional einer Verwürfelung (Scrambling) unterworfen.

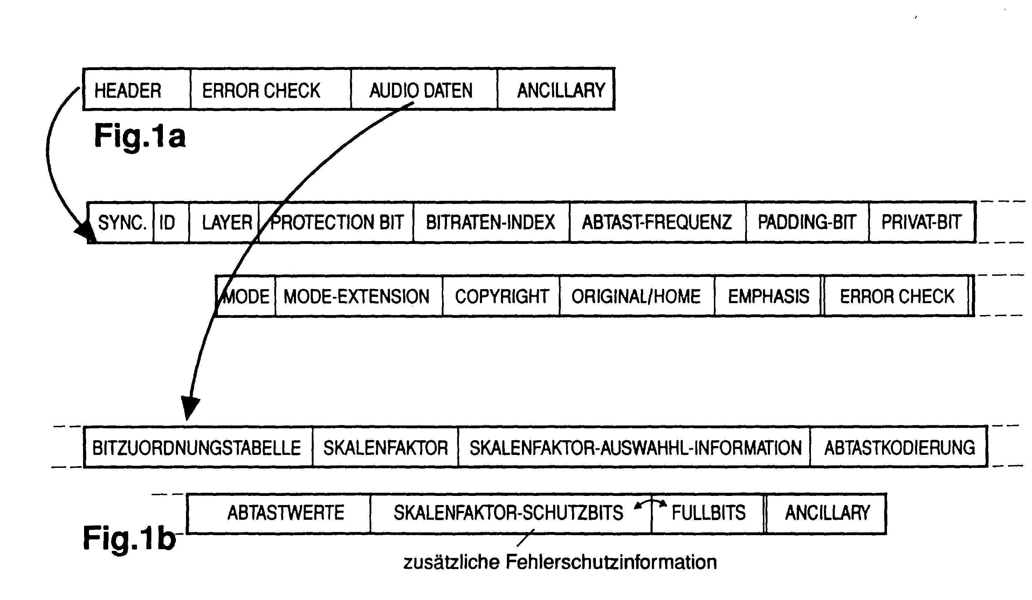

Fig. 1b zeigt eine detaillierte Aufteilung des Rahmenformats nach Fig. 1a. Zu Beginn des Headers ist ein 12 bit langes Synchronwort (alle Bit auf Wert logisch "1"). Daran schließt sich ein Identifikation Bit ID,
- eine zwei Bit "Layer"-Information über den gewählten Datenreduktionsalgorithmus bzw. das gewählte psychoakustische Modell der codierten Audiosignale,
- ein Schutzbit mit einer Information, ob informationstheoretische Redundanz übertragen wird,
- ein Bitraten-Index (vier Bit) mit einer Information über die bei der Codierung gewählte Bitrate, z.B. 32 kbit/s oder 128 kbit/s,
- eine Information über die bei der Abtastung der Audiosignale gewählte Abtastfrequenz (zwei bit), z.B. 44.1 kHz,
- ein Padding Bit, welches nur bei der Abtastrate von 44,1 kHz auf logisch "1" liegt,
- ein Privat-Bit (nicht festgelegt)
- eine Inforamtion (zwei bit) über den gewählten Mode, z.B. Stereo, Intensity Stereo, Mono usw.,
- einer Mode-Extension-Information (zwei bit) über die gewählten Subbänder bei Intensity Stereo-Mode,
- ein Copyright-Bit, wobei logisch "1" bedeuted:" urheberrechtlich geschützt",
- ein Original/Home-Bit, mit einer Information, ob die übertragenen Audiosignale von einer Originalaufnahme oder Live-Sendung stammen oder einer Kopie,
- eine Emphasis-Information (zwei bit).

Der Fehlerprüfteil (Error Check) weist ein 16 bit CRC-Parity-Check-Wort auf, welches insbesondere zur Fehlerdetektion von Übertragungsfehlern des Headers, insbesondere des Synchronwortes und der Skalenfaktor-Auswahlinformation und der Bitzuordnungstabelle im Audio-Datenteil vorgesehen ist.

Der Audiodatenteil weist im wesentlichen eine Bitzuordnungstabelle, Skalenfaktor-Auswahlinformationen, Skalenfaktoren, Abtastkodierungsinformationen, Abtastwerte, bedeutungslose Füllbits und zusätzliche Fehlerschutzinformation am Ende des Audiodatenteils odes des Datenrahmens auf. Die Lage der Füllbits und der zusätzlichen Fehlerschutzinformation kann auch wie in Fig. 1b gezeigt, gegeneinander vertauscht sein.

Der tonsignalbezogene Zusatzdatenteil wird vom Benutzer definiert.

Die zusätzliche Fehlerschutzinformation im Datenrahmen, die unmittelbar am Ende des Datenrahmens vor der tonsignalbezogenen Zusatzinformation eingefügt ist, ist insbesondere für den Schutz von Daten des folgenden Datenrahmens relevant. Vorzugsweise dient sie nur zum Schutz der im folgenden Datenrahmen übertragenen Skalenfaktoren. Dabei ist es zweckmäßig, wenn die zusätzliche Fehlerschutzinformation zum Schutz der MSBs der Skalenfaktoren dient. Ist die Zahl der Skalenfaktoren pro Subband drei, so sind also auch nur die drei MSBs zu schützen.

Vorzugsweise dient die zusätzliche Fehlerschutzinformation zum gemeinsamen Schutz der Skalenfaktoren des ersten und zweiten Kanals eines Stereo- oder Zweitonkanals. Die zusätzliche Fehlerschutzinformation selbst besteht aus einem oder mehreren CRC-Worten und ersetzt an der ihr zugeordneten Stelle im Datenrahmen dort vorgesehene Füllbits.

Besonders vorteilhaft ist es, wenn die zusätzliche Fehlerschutzinformation aus vier CRC-Worten besteht, die jedes für sich die Skalenfaktoren einer Anzahl vonm Subbandern schützen. Außerdem bezieht sich dier Erfindung auf ein Verfahren der vorstehend beschriebenen Art und zum Erkennen von Übertragungsfehlern auf digitalen Übertragungsstrecken für Tonsignale.

Für das Erkennen von Übertragungsfehlern bei der Übertragung digitaler Tonsignale ist es bekannt, den digitalen Nutzbitstrom redundante Bits hinzuzufügen, z.B. Füllbits, die es erlauben, am Empfangsort Übertragungsfehler zu erkennen und gegebenenfalls zu korrigieren (Fehlerschutzcode). In vielen Fällen ist das Erkennen von Übertragungsfehlern innerhalb des gesamten oder innerhalb von Teilen des Nutzsignals nicht möglich, weil entweder
kein Fehlerschutz vorhanden ist,
der Fehlerschutz nicht ausreichend ist,
der Fehlerschutz auf das Gesamtsignal bezogen ist und Störungen bestimmter Signalanteile nicht gesondert erkennbar sind.

Aufgabe der Erfindung ist es, die vorstehend beschriebenen teilbandcodierten Tonsignale besser gegen Übertragungsfehler zu schützen. Eine weitere Aufgabe der vorliegenden Erfindung besteht darin, die Erkennung von Übertragungsfehlern auf der Empfangsseite, insbesondere innerhalb bestimmter Signalanteile zu verbessern.

Die erste Aufgabe wird erfindungsgemäß mit einem Übertragungsverfahren mit dem Merkmal nach Anspruch 1 gelöst. Vorteilhafte Weiterbildungen sind in den Unteransprüchen 2 bis 10 beschrieben.

Bei der digitalen Codierung von Tonsignalenwird häufig eine Gleikommatechnik angewendet. Die Kommaverschiebungen werden nur begrenzt häufig, beispielsweise 500 mal in einer Sekunde, zugelassen. Der Wert vor dem Komma ist dann über einen bestimmten Zeitraum konstant, z.B. für 2 ms. Diesen Wert bezeichnet man als Skalenfaktor. Er wird seinerseits digital codiert, meist mit einem hohen Fehlerschutz versehen und als Signalanteil innerhalb des digitalen Neztbitstroms übertragen.

Aus den Charakteristiken des Pegelverlaufs eines Tonsignals ist nur zu erwarten, daß sich
Skalenfaktorwerte meist nur langsam ändern,
schnelle Änderungen nur vonniedrigen zu hohen Pegelwerten auftreten

Daraus lassen sich die folgenen Prüfkriterien ableiten:
1. Normaler Pegeländerungsverlauf (Fig. la), wobei die Höhe jeder dargestellten Säule den jeweiligen Pegelwert bezeichnet, der für einen bestimmten Zeitraum von beispielsweise 2 ms gilt.
2. Normaler Pegeländerungsverlauf mit "normalem" Sprung (Fig. 1b).
3. Wahrscheinlich fehlerhaft übertragene (r) Skalenfaktor(en) mit isoliert auftretender Pegelerhöhung (Fig. 1c), wobei der fehlerhafte Skalenfaktor schraffiert eingezeichnet ist.
4. Wahrscheinlich fehlerhaft übertragene(r) Skalenfaktor(en) mit isoliert auftretender Pegelniedrigung (Fig. 1d), wobei die fehlerhaften Skalenfaktoren schraffiert eingezeichnet sind.

Um einen fehlerhaften Pegelsprung gemäß Fig. 1c oder 1d zu erkennen, wird der Pegelsprung mit einem statistische zu erwartenden Signalwert verglichen, wobei dem Vergleich mit der Statistik die Pegelverläufe vor und nach dem Pegelsprung zugrundgelegt werden. Im Falle von Figuren 1c und 1d bedeutet dies, daß nach dem Auftreten der schraffiert markierten Pegelsprünge festgestellt wird, daß sofort nach dem bzw. nach den betrachteten Pegelsprüngen sofort wieder ein neuer Pegelsprung, jedoch in gegenläufiger Richtung, auftritt. Als Pegelsprung wird nur eine Pegelveränderung oberhalb einer definierten Schwelle angesehen.

Ein auf diese Weise als gehlerhaft erkannter bzw. eigestufter Skalenfaktor läßt sich leicht durchden wahrscheinlich richtigen Skalenfaktor ersetzen, nämlich entweder durch Extrapolation (Wiederholung des vorangegangenen Skalenfaktors) oder durch Interpolation zwischenden als richtig angenommenen Skalenfaktoren.

Die vorstehend beschriebene Fehlererkennung läßt sich empfängerseitig mit einfachen Mitteln ohne größeren Aufwand durchführen, da im Grunde genommen nur festgestellt werden muß, ob nacheinem Pegelsprung ein neuer, gegenläufig gerichteter Pegelsprung auftritt oder nicht. Mittels des erfindungsgemäßen Verfahrens lassen sich nun Speichermedien z.B. optische Speichermedien wie Compactdisc, oder aufnehmbare optische Speichermedien wie magnetooptische Disc oder Speicherchipcarten gestalten, bei der digitalisierte Tonsignale gespeichert sind, bei der das digitalisierte Tonssignal einer Subband-Codierung unterzogen ist aß das Gerät einen Speicher zur Speicherung des empfangenen Tonsignals bzw. ausgewählte Anteile dieses Signals aufweist, sowie Pegelsprungerkennungsmittel, die im Falle des auftretens von Pegelsprüngen in dem empfangenen Tonsignal bzw. in ausgewählten Anteilen dieses Signals die Signalverläufe vor und nach dem betreffenden Pegelsprung vergleichen mit solchen Signalverläufen, die der Signalstatistik entsprechen und das die betrachteten Pegelsprünge als fehlerhaft ansehbar sind, wenn ihr Wert von einem statistisch zu erwartenden Signalverlauf, der im Speicher gespeichert ist abweicht.

## Patentansprüche

1. Verfahren zum Übertragen, Speichern und/oder Empfangen digitaler, subband-codierter Tonsignale, wobei Subbands ein oder mehrere Skalenfaktor/en zugeordnet ist/werden und die so codierten Signale in aufeinanderfolgenden Datenrahmen übertragen und empfangsseitig decodiert und wiedergegeben werden, wobei ein Datenrahmen die folgenden Teile aufweist:
- einen Header mit digitalisierten Kontrollinformationen wie z.B. Synchronisationswort, Bitraten-Information, Abtastraten-Information, Modus-Informationen;
- einen Fehlerprüf- und/oder -korrekturteil mit einem ersten Fehlerschutz-Code;
- einen Audiodatenteil,
**gekennzeichnet** durch:
- der erste Fehlerschutz-Code ist ein CRC-Schutzwort und betrifft nur den Header;
- der Audiodatenteil enthält unter anderem eine Bit-Zuordnungs-Tabelle, eine Skalenfaktor-Auswahlinformation, den Subbands zugeordnete Skalenfaktoren und Abtastwerte;
- einem Zusatzinformations-Teil mit audiosignal-bezogenen Zusatzinformationen, wobei ein weiteres CRC-Wort oder weitere CRC-Worte zum Schutz der MSBs von Skalenfaktoren am Ende des Datenrahmens im Bereich der audiosignal-bezogenen Zusatzinformation eingefügt ist bzw. sind.

2. Verfahren zum Übertragen, Speichern und/oder Empfangen digitaler, subband-codierter Tonsignale, wobei Subbands ein oder mehrere Skalenfaktor/en zugeordnet ist/werden und die so codierten Signale in aufeinanderfolgenden Datenrahmen übertragen und empfangsseitig decodiert und wiedergegeben werden, wobei ein Datenrahmen die folgenden Teile aufweist:
- einen Header mit digitalisierten Kontrollinformationen wie z.B. Synchronisationswort, Bitraten-Information, Abtastraten-Information, Modus-Informationen;
- einen Fehlerprüf- und/oder -korrekturteil mit einem ersten Fehlerschutz-Code;
- einen Audiodatenteil,
**gekennzeichnet** durch:
- der Audiodatenteil enthält unter anderem eine Bit-Zuordnungs-Tabelle, eine Skalenfaktor-Auswahlinformation, den Subbands zugeordnete Skalenfaktoren und Abtastwerte;
- der erste Fehlerschutz-Code ist ein CRC-Schutzwort und ist vorgesehen für die Detektion von Übertragungsfehlern des Headers und der Skalenfaktor-Auswahlinformation und der Bit-Zuordnungs-Tabelle aus dem Audiodatenteil;
- einem Zusatzinformations-Teil mit audiosignal-bezogenen Zusatzinformationen, wobei ein weiteres CRC-Wort oder weitere CRC-Worte zum Schutz der MSBs von Skalenfaktoren am Ende des Datenrahmens im Bereich der audiosignal-bezogenen Zusatzinformation eingefügt ist bzw. sind.

3. Verfahren nach Anspruch 1 oder 2, **dadurch gekennzeichnet,** daß die weiteren CRC-Schutzworte den MSBs der Skalenfaktoren des folgenden Datenrahmens zugeordnet sind.

4. Verfahren nach einem der Ansprüche 1 bis 3, **dadurch gekennzeichnet,** daß innerhalb eines Datenrahmens Gruppen von Skalenfaktoren gebildet sind, denen jeweils ein CRC-Schutzwort zugeordnet ist.

5. Verfahren nach einem oder mehreren der Ansprüche 1 bis 4, **dadurch gekennzeichnet,** daß im Falle des Auftretens von Sprüngen in den die Pegel, z.B. den Skalenfaktoren, des empfangenen Tonsignals betreffenden Anteilen, die Signalverläufe vor und nach dem betreffenden Pegelsprung verglichen werden mit solchen Signalverläufen, die der Signalstatistik entsprechen und daß die betrachteten Pegelsprünge als fehlerhaft angesehen und entsprechend korrigiert werden, wenn ihr Wert von einem statistisch zu erwartenden Signalverlauf abweicht.

6. Verfahren nach einem oder mehreren der Ansprüche 1 bis 5, **dadurch gekennzeichnet,** daß die weiteren CRC-Schutzworte den drei MSBs der Skalenfaktoren zugeordnet sind.

7. Verfahren nach einem oder mehreren der Ansprüche 1 bis 6, **dadurch gekennzeichnet**, daß die weiteren CRC-Schutzworte Skalenfaktoren des ersten und zweiten Kanals eines Stereo- oder Zweiton-Signals gemeinsam zugeordnet sind.

8. Verfahren nach einem oder mehreren der Ansprüche 1 bis 7, **dadurch gekennzeichnet,** daß Füllbits durch die weiteren CRC-Schutzworte belegt sind.

9. Gerät, das ein mit dem Verfahren nach einem der Ansprüche 1 bis 8 übertragenes digitales Tonsignal empfängt, **dadurch gekennzeichnet,** daß das Gerät einen Speicher zur Speicherung der weiteren CRC-Schutzworte und mit dem Speicher verbundene Mittel zur Fehlerkorrektur und/oder -verschleierung von gestörten Skalenfaktoren aufweist und daß die Mittel die weiteren CRC-Schutzworte zur Fehlerkorrektur und/oder -verschleierung für die Skalenfaktoren verwenden.

10. Gerät nach Anspruch 9, **dadurch gekennzeichnet,** daß das Gerät einen Speicher zur Speicherung des empfangenen Tonsignals bzw. ausgewählter Anteile dieses Tonsignals aufweist, sowie Pegelsprung-Erkennungsmittel, die im Falle des Auftretens von Pegelsprüngen in dem empfangenen Tonsignal bzw. in den ausgewählten Anteilen des Tonsignals die Signalverläufe vor und nach dem betreffenden Pegelsprung vergleichen mit solchen Signalverläufen, die der Signalstatistik entsprechen und daß die betrachteten Pegelsprünge als fehlerhaft angesehen und entsprechend korrigiert werden, wenn ihr Wert abweicht von einem statistisch zu erwartenden Signalverlauf, der im Speicher gespeichert ist.

11. Speichermedium, z.B. optischer oder magnetischer Speicher, mit gespeicherten digitalisierten Tonsignalen, die mit einem Verfahren nach einem oder mehreren der Ansprüche 1 bis 8 codiert sind.

## Claims

1. A method for transmitting, storing and/or receiving digital, sub-band coded audio signals in which one or more scaling factors are associated with subbands, and the thus coded signals are transmitted in succeeding data frames and decoded and reproduced at the receiving end, in which a data frame comprises the following parts;
- a header with digitalized items of check information such as a synchronising word, an item of bit rate information, an item of sampling information, items of mode information;
- an error checking and/or correcting part with a first error protection code;
- an audio data part,
characterised by:
- the first error protection code is a CRC protection word and relates only to the header;
- the audio data part includes inter alia a bit allocation table, an item of scaling factor selection information, the scaling factors associated with the subbands and sampling values;
- an ancillary information part with items of ancillary information relating to the audio signals, in which for the protection of the MSBs of scaling factors a further CRC-word or further CRC-words is or are inserted at the end of the data frame in the region of the ancillary information relating to the audio signals.

2. A method for transmitting, storing and/or receiving digital, sub-band coded audio signals in which one or more scaling factors are associated with subbands, and the thus coded signals are transmitted in succeeding data frames and decoded and reproduced at the receiving end, in which a data frame comprises the following parts;
- a header with digitalized items of check information such as a synchronising word, an item of bit rate information, an item of sampling information, items of mode information;
- an error checking and/or correcting part with a first error protection code; an audio data part,
characterised by:
- the audio data part includes inter alia a bit allocation table, an item of scaling factor selection information, the scaling factors associated with the subbands, and sampling values;
- the first error protection code is a CRC protection word and is provided for the detection of transmission errors of the header and the scaling factor selection information and the bit allocation table from the audio part;
- an ancillary information part with items of ancillary information relating to the audio signals, in which for the protection of the MSBs of scaling factors a further CRC word or further CRC words is or are inserted at the end of the data frame in the region of the ancillary information relating to the audio signals.

3. A method according to claim I or 2 characterised in that the further CRC protection words are associated with the MSBs of the scaling factors of the following data frame.

4. A method according to any of claims I to 3, characterised in that within a data frame there are formed groups of scaling factors, with each of which a CRC protection word is associated.

5. A method according to one or more of claims I to 4, characterised in that, in the event of the occurrence of jumps in the components relating to the level e.g. the scaling factors, of the received audio signal, the signal waveforms before and after the relevant jump in level are compared with such signal waveforms as correspond to the statistics of the signal and in that the jumps in level under observation are considered as errors and are corrected accordingly if their value deviates from a signal waveform that could be statistically expected.

6. A method according to one or more of claims 1 to 5, characterised in that, the further CRC protection words are associated with the three MSBs of the scaling factors.

7. A method according to one or more of claims 1 to 6, characterised in that, the further CRC protection words are associated in common with scaling factors of the first and second channels of a stereo or two-tone channel signal.

8. A method according to one or more of claims 1 to 7, characterised in that, filler bits are occupied by the further CRC protection words.

9. An apparatus which receives a digital audio signal transmitted in accordance with the method of any of claims I to 8, characterised in that, the apparatus comprises a store for storing the further CRC protection words and connected to the store, means for error correcting and/or concealing faulty scaling factors, and in that the means use the further CRC protection words for the error correction and/or concealment for the scaling factors.

10. An apparatus according to claim 9, characterised in that, the apparatus comprises a store for storing the received audio signal or selected components of this audio signal, as well as level jump detecting means which, in the event of the occurrence of jumps in the level of the received audio signal or in the selected components of the audio signal, compare the signal waveforms before and after the relevant jump in level with such signal waveforms as correspond to the statistics of the signal and in that the jumps in level under observation are considered as errors and are corrected accordingly if their value deviates from a signal waveform that could be statistically expected and which is stored in the store.

11. A storage medium e.g. an optical or magnetic store, with stored digitalized audio signals, which are coded by a method in accordance with one or more of claims 1 to 8.

## Revendications

1. Procédé pour la transmission, l'enregistrement et/ou la réception de signaux audio-numériques, codés en sous-bande, dans lequel un ou plusieurs facteurs d'échelle sont attribués à des sous-bandes et où les signaux ainsi codés sont transmis dans des trames de données successives, puis décodés et reproduits côté récepteur, sachant qu'une trame de données comporte les parties suivantes :
- un en-tête contenant des informations de contrôle numérisées, telles que mot de synchronisation, information sur le débit de bits, information sur le taux d'échantillonnage, informations sur le mode ;
- une partie pour un contrôle et/ou une correction des erreurs contenant un premier code de protection contre les erreurs ;
- une partie de données audio,
procédé caractérisé
- en ce que le premier code de protection contre les erreurs est un mot de protection CRC et ne concerne que l'en-tête ;
- en ce que la partie de données audio comporte entre autres une table d'allocation de bits, une information de sélection des facteurs d'échelle, les facteurs d'échelle attribués aux sous-bandes et des valeurs d'échantillonnage ;
- par une partie d'informations supplémentaires contenant des informations supplémentaires relatives à un signal audio dans laquelle est/sont inséré(s) à la fin de la trame de données dans une portion des informations supplémentaires relatives à un signal audio encore un mot CRC ou plusieurs mots CRC pour la protection des MSB de facteurs d'échelle.

2. Procédé pour la transmission, l'enregistrement et/ou la réception de signaux audio numérique, codés en sous-bande, dans lequel un ou plusieurs facteurs d'échelle sont attribués aux sous-bandes et où les signaux ainsi codés sont transmis dans des trames de données successives, puis décodés et reproduits côté récepteur, sachant qu'une trame de données comporte les parties suivantes :
- un en-tête contenant des informations de contrôle numérisées, telles que mot de synchronisation, information sur le débit de bits, information sur le taux d'échantillonnage, informations sur le mode ;
- une partie pour un contrôle et/ou une correction des erreurs contenant un premier code de protection contre des erreurs ;
- une partie de données audio,
procédé caractérisé
- en ce que la partie de données audio comporte entre autres une table d'allocation de bits, une information de sélection des facteurs d'échelle, les facteurs d'échelle attribués aux sous-bandes et des valeurs d'échantillonnage ;
- en ce que le premier code de protection contre des erreurs est un mot de protection CRC qui sert à la détection d'erreurs de transmission de l'en-tête et de l'information de sélection des facteurs d'échelle ainsi que de la table d'allocation des bits de la partie de données audio ;
- par une partie d'informations supplémentaires contenant des informations supplémentaires relatives à un signal audio, dans laquelle est/sont inséré(s) à la fin de la trame de données dans une portion des informations supplémentaires relatives à un signal audio encore un mot CRC ou plusieurs mots CRC pour la protection des MSB de facteurs d'échelle ;

3. Procédé selon la revendication 1 ou 2 caractérisé en ce que les autres mots de protection CRC sont attribués aux bits les plus significatifs des facteurs d'échelle de la trame suivante;

4. Procédé selon l'une des revendications 1 à 3, caractérisé en ce que la trame de données comporte des groupes de facteurs d'échelle et qu'un mot de protection CRC est respectivement attribué à chacun des groupes.

5. Procédé selon l'une quelconque ou plusieurs des revendications 1 à 4 caractérisé en ce qu'en présence de sauts constatés dans celles des portions du signal audio reçu relatives aux niveaux, p.ex. les facteurs d'échelle, les allures du signal avant et après le saut de niveau respectif sont comparées avec les allures de signal correspondant aux statistiques de signaux, et que les sauts de niveau considérés sont jugés erronés et corrigés en conséquence dès lors que leur valeur diffère d'une allure de signal attendue selon les statistiques.

6. Procédé selon l'une des revendications 1 à 5, caractérisé en ce que les autres mots de protection CRC sont attribués aux trois bits les plus significatifs des facteurs d'échelle ;

7. Procédé selon l'une des revendications 1 à 6, caractérisé en ce les autres mots de protection CRC sont simultanément attribués à des facteurs d'échelle du premier et du deuxième canal d'un signal stéréo.

8. Procédé selon l'une des revendications 1 à 7, caractérisé en ce que les bits de remplissage sont occupés par les autres mots de protection CRC.

9. Système récepteur de signal audio transmis selon le procédé décrit dans l'une des revendications 1 à 8, caractérisé en ce que le récepteur comporte une mémoire pour l'enregistrement des autres mots de protection CRC et des systèmes reliés à la mémoire pour la correction et/ou le masquage des erreurs de facteurs d'échelle et que les moyens utilisent les autres mots de protection CRC pour la correction et/ou le masquage d'erreurs de facteurs d'échelle.

10. Système récepteur selon la revendication 9 **caractérisé en ce que** le récepteur comporte une mémoire pour l'enregistrement du signal audio reçu ou de certaines portions choisies dudit signal audio, ainsi que des moyens de détection de sauts de niveau qui, en présence de sauts de niveau dans le signal audio reçu ou dans les portions choisies dudit signal audio, comparent les allures du signal avant et après le saut de niveau en question avec des allures de signal correspondant aux statistiques de signaux, et caractérisé en ce que les sauts de niveau considérés sont jugés erronés et corrigés en conséquence dès lors que leur valeur diffère d'une allure de signal attendue selon les statistiques enregistrées dans la mémoire.

11. Support d'enregistrement, tel qu'un support optique ou magnétique contenant des signaux audio numérisés codés selon le procédé décrit dans l'une ou plusieurs des revendications 1 à 8.
